# EUROPÄISCHE PATENTSCHRIFT

(11) **EP 0 693 431 B1**
(45) Veröffentlichungstag und Bekanntmachung des Hinweises auf die Patenterteilung: **22.10.1997**
(21) Anmeldenummer: 95109589.2
(22) Anmeldetag: 21.06.1995
(51) Int. Cl.: B65D 19/44

(54) **Keil zum Sichern von Transportgut**
Wedge for securing goods
Cale pour la fixation de marchandises

(30) Priorität: 07.07.1994 DE 9410924 U
(43) Veröffentlichungstag der Anmeldung: 24.01.1996
(73) Patentinhaber: Kunststoffwerk Leinefelde GmbH, D-37327 Leinefelde (DE)
(72) Erfinder: Seute, Heinz-Günter, D-34346 Hann.Münden (DE); Ringe, Gunter, D-37085 Göttingen (DE)
(74) Vertreter: Rehberg, Elmar, Dipl.-Ing.

(56) Entgegenhaltungen:
- WO-A-92/06012
- DE-A- 3 701 117
- FR-A- 2 351 855
- US-A- 3 753 407
- US-A- 5 413 054

## Beschreibung

Die Erfindung betrifft einen Keil zum Sichern von Transportgut, insbesondere in der Form von Rollen, auf Paletten. Mehrere derartiger Keile werden üblicherweise eingesetzt, um eine Lageveränderung von rollenförmigen Transportgütern, z. B. Papier-, Kunststoffolien- oder Metallfolienrollen, bei deren Transport zu verhindern. Der Keil liegt dabei mit seiner Unterseite auf der Palette auf und die Rolle mit ihrer Oberfläche auf der Keilschräge. Zum zusätzlichen Sichern der Rolle werden häufig auch noch Spannmittel wie z. B. sogenannte Transportgurte eingesetzt. Die Spannmittel umgreifen einen gewissen Bereich des Umfangs der Rolle und werden entlang der Unterseite der Palettenbretter geführt, so daß in Zusammenwirkung der Spannmittel mit den Keilen ein sicherer Transport der Rolle gewährleistet ist.

Ein Keil der oben beschriebenen Art ist durch die FR-A-2 351 855 bekannt. Oft ist es zum Sichern einer Rolle wünschenswert und notwendig, mehr als nur einen Keil auf jeder Seite der Rolle einzusetzen. Dabei ist es von Vorteil, wenn alle Keile auf einer Seite der Rolle so zueinander ausgerichtet sind, daß eine gleichmäßige Auflagefläche für die Rolle geschaffen ist. Es wäre daher wünschenswert, wenn mehrere Keile so miteinander verbunden werden könnten, daß sie eine eindeutige und reproduzierbare Relativlage zueinander einnehmen würden. Dies ist mit dem bekannten Keil nicht möglich. Schließlich ist es von Vorteil, wenn die Möglichkeit gegeben ist, daß mit dem Spannmittel nicht nur die Rolle auf der Palette befestigt wird, sondern wenn auch zusätzlich die Keile von dem Spannmittel erfaßt werden und somit relativ zu der Rolle und der Palette fixiert werden. Aufgrund des beliebigen Durchmessers der zu transportierenden Rolle und ihrer möglichen Relativpositionen zu den Brettern der Palette ist hierzu eine gewisse Vielfalt der möglichen Angriffspunkte des Spannmittels an dem Keil notwendig. Dies ist aufgrund der einfachen Form des bekannten Keils bei diesem nur in sehr begrenztem Umfang möglich.

Die Aufgabe der Erfindung besteht daher darin, einen Keil der oben beschriebenen Art zu schaffen, der auch bei Anordnung am unteren Durchmesser einer Rolle ein Ergreifen durch ein Spannmittel im Spannzustand ermöglicht und der sich mit weiteren Keilen verbinden läßt, um eine gleichmäßige Auflagefläche für eine Rolle zu schaffen.

Erfindungsgemäß wird dies durch die Merkmale des Anspruchs 1 gelöst. Der Keil besitzt in seinen seitlichen Endbereichen Hinterschneidungen zum Zusammenschluß mehrerer Keile nebeneinander und auf seiner Rückseite mindestens eine Aussparung für den Eingriff eines Spannmittels. Die Hinterschneidungen eines Keils sind einander entgegengesetzt aber punktsymmetrisch in den seitlichen Endbereichen angeordnet. So bildet z. B. die Hinterschneidung in dem einen Endbereich eines Keils genau das Gegenstück zu der Hinterschneidung in dem endsprechenden gegenüberliegenden Endbereich eines zweiten Keils. Die beiden Keile lassen sich also formschlüssig aneinanderfügen und bilden dann eine durchgehende Auflagefläche. Die Aussparung für den Eingriff eines Spannmittels ist außermittig auf der Rückseite des Keils, d. h. dem Bereich des Keils, der von dem Spannmittel in Angriff genommen wird, angeordnet. Mit der Aussparung sind mehrere Möglichkeiten für den Angriff eines Spannmittels an dem Keil geschaffen. Vorzugsweise greift das Spannmittel in die Aussparung ein, da es dort durch die seitlichen Begrenzungswände der Aussparung gegen seitliche Verschiebungen gesichert ist. Ob das Spannmittel zum Eingriff in die Aussparung gelangt, hängt von dem Durchmesser der Rolle und der Relativlage der Rolle und des Keils zu den Brettern der Palette ab. Die einzelnen Bretter der Palette sind zueinander beabstandet und das Spannmittel wird zum Sichern der Rolle auf der Palette unter einigen oder allen dieser Bretter hindurchgeführt. Ob und an welchem Punkt des Keils das Spannmittel angreift, hängt also von der Relativlage des Keils zu dem Zwischenraum zwischen zwei Brettern der Palette ab. In der Regel wird diese relative Positionierung des Keils so geschehen, daß das Spannmittel vorzugsweise zum Eingriff in die Aussparung gelangt oder aber, falls dies nicht möglich ist, den Keil auf seiner Rückseite in Angriff nimmt. Mit dem neuen Keil ist daher die Wahrscheinlichkeit, daß das Spannmittel sowohl die Rolle als auch den Keil erfaßt, sehr viel größer geworden.

Der Keil weist bevorzugt eine mit einer Riffelung versehene Unterseite auf. Vorteilhaft ist dann die Riffelung sägezahnförmig ausgebildet und ihre Zähne sind nach der Kraftwirkrichtung ausgerichtet. Eine Riffelung im allgemeinen wird sich bei Belastung des Keils in das relativ weiche Holz der Palette eindrücken und so zu einem besseren Formschluß zwischen dem Keil und der Palette führen. Insbesondere eine sägezahnförmige Riffelung, deren Zähne nach der Kraftwirkrichtung ausgerichtet sind, bietet einen nochmals erhöhten Schutz gegen ein Verrutschen des Keils bei Belastung.

Bei einem bevorzugten Ausführungsbeispiel sind die Hinterschneidungen S-förmig ausgebildet. Dies bietet zum einen die Möglichkeit, daß mehrere Keile durch seitliches Ineinanderhaken miteinander verbunden werden, läßt den einzelnen Keilen aber dabei ein gewisses Maß an Spiel, so daß Toleranzen der Keile selbst oder aber auch Unebenheiten der Oberfläche der Rolle ausgeglichen werden können.

Auf der Unterseite des Keils kann an die Aussparung anschließend eine Rinne für das Spannmittel vorgesehen sein. Eine derartige Rinne ermöglicht in jedem Fall, daß das Spannmittel zum Eingriff in die Aussparung gebracht und unter dem Keil hindurchgeführt werden kann. Es versteht sich dabei, daß die Tiefe der Rinne größer als die Dicke des Spannmittels ist. Dann wird das Spannmittel nicht zwischen der Unterseite des Keils und den Brettern der Palette eingeklemmt. Das Spannmittel kann dann aber immer noch unter einem oder mehreren der Bretter der Palette hindurchgeführt werden, so daß der höchstmögliche Schutz gegen ein Verrutschen der Rolle dann gegeben ist.

Der Keil kann nach unten offene Kammern besitzen. Der Keil ist dann nicht massiv ausgeführt, sondern besteht aus einem Verbund von Stegen, wobei nur die Keilschräge sowie die Seitenwände, d. h. die jeweiligen seitlichen Endbereiche, und die Rückwand in sich geschlossen ausgeführt sind. Dies führt zu einer erheblichen Material- und Gewichtseinsparung, unter Beibehaltung der mechanischen Stabilität des Keils.

Zur weiteren Verbesserung der Sicherungseigenschaften des Keils kann der Keil eine Keilschräge mit einer rutschfesten Oberfläche aufweisen. Dies kann in Form einer Aufrauhung oder Profilierung der Oberfläche der Keilschräge geschehen. Es sollte dabei allerdings darauf geachtet werden, daß eine derart ausgebildete Oberfläche nicht dazu geeignet ist, das Transportgut zu beschädigen.

Zur Erhöhung der Stabilität des Keils gegen ein seitliches Verkippen trägt es bei, wenn der Keil eine Breite aufweist, die größer ist als seine Länge. Dies ist besonders wichtig, wenn nicht mehrere Keile miteinander verbunden werden, sondern einzelne Keile separat eingesetzt werden.

Der Keil kann aus Kunststoff, Leichtmetall oder Stahl bestehen. Der Keil kann dann in besonders wirtschaftlicher Weise durch ein Guß-, Spritzguß- oder Preßverfahren hergestellt werden. Die Materialien weisen weiterhin eine hohe Witterungsbeständigkeit auf und besitzen eine hohe Resistenz gegen die Aufnahme von Verschmutzungen bzw. lassen sich einfach reinigen.

Die Erfindung wird anhand der Zeichnungen weiter beschrieben und erläutert. Es zeigt:
- Figur 1: einen Schnitt durch einen Keil im Bereich seiner Aussparung,
- Figur 2: eine Ansicht von hinten auf den Keil gemäß Figur 1,
- Figur 3: eine Ansicht von unten auf den Keil gemäß Figur 1,
- Figur 4: eine Ansicht von hinten auf ein weiteres Ausführungsbeispiel des Keils und
- Figur 5: eine Ansicht von oben auf eine Palette mit mehreren sich darauf befindlichen Keilen.

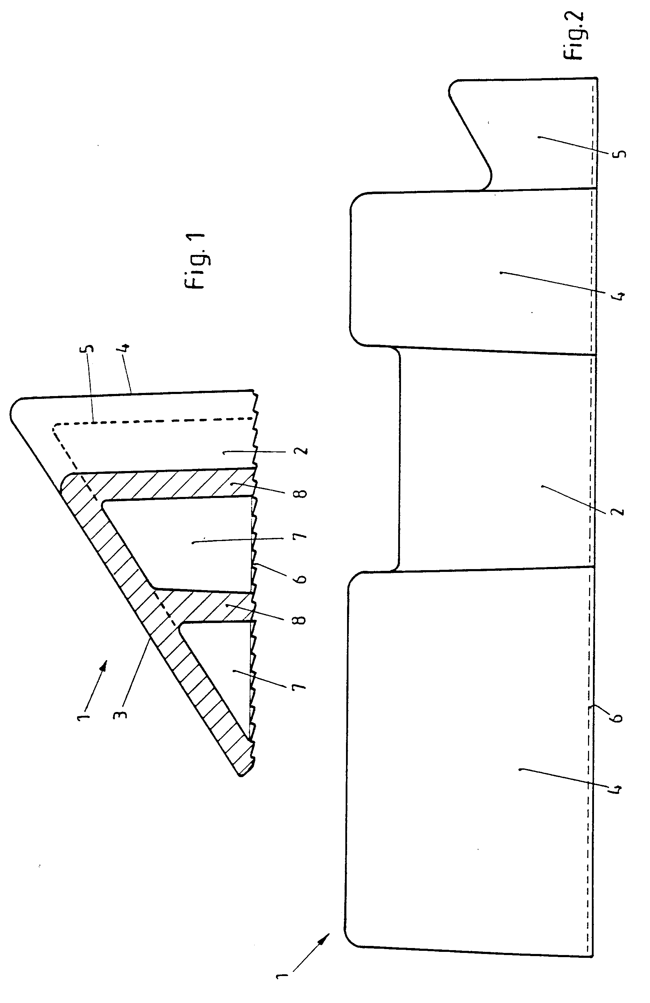

Die Figur 1 zeigt einen Schnitt durch einen Keil 1 im Bereich seiner Aussparung 2. Der Keil 1 weist eine Keilschräge 3 sowie eine Rückseite 4 auf. Eine seitliche Hinterschneidung 5 ist in gestrichelter Linienführung dargestellt. Die Unterseite des Keils 1 ist mit einer Riffelung 6 versehen, die bei Belastung der Keilschräge 3 durch ein Transportgut einen rutschfesten Stand des Keils auf einer Palette gewährleistet. Der Körper des Keils 1 ist nicht massiv ausgeführt, sondern weist eine Anzahl von nach unten offenen Kammern 7 auf, so daß die Stabilität des Keils 1 im wesentlichen durch die verbleibenden Stege 8 bestimmt ist. Lediglich die Keilschräge 3 sowie die Rückseite 4 und die Seitenwände sind als durchgehende Flächen ausgebildet. Der Anstellwinkel der Keilschräge 3, d. h. der Winkel zwischen der Keilschräge und der waagerechten Unterseite beträgt bei den dargestellten Ausführungsbeispielen etwa 35° und sollte diesen Wert in der Regel nicht um mehr als 10° über- bzw. unterschreiten.

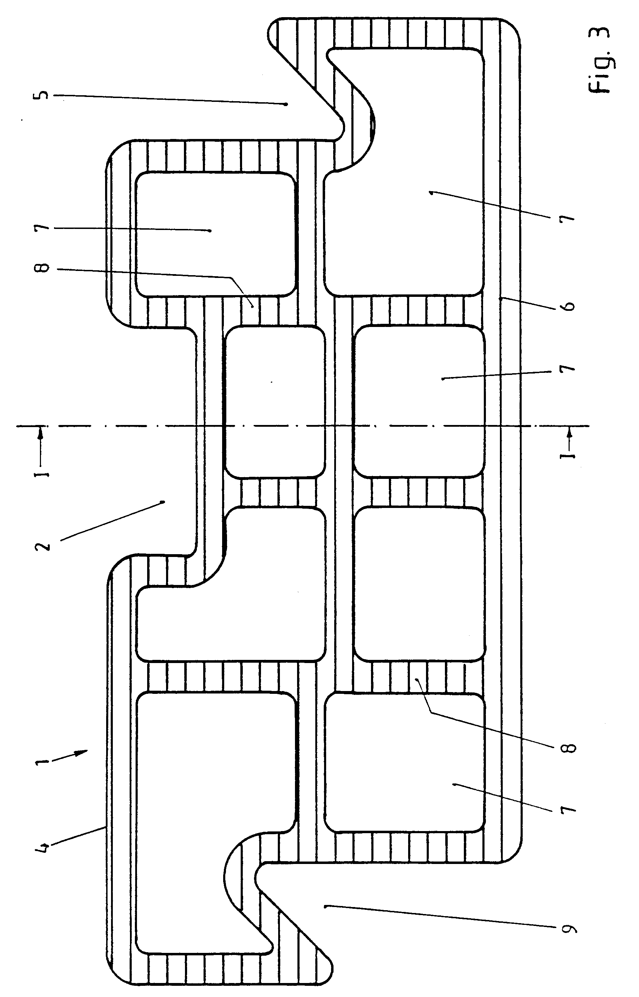

Die Figur 2 zeigt eine Ansicht von hinten auf den Keil 1. Hier ist deutlich die außermittig angeordnete Aussparung 2 im rückwertigen Bereich des Keils 1 zu sehen. Ein Spannmittel wie z. B. ein Spanngurt kann entweder durch die Aussparung 2 geführt werden, wobei das Spannmittel dann durch die seitlichen Begrenzungwände der Aussparung 2 gegen ein seitliches Verrutschen gesichert ist, oder das Spannmittel kann entlang der Rückseite 4 geführt werden, falls die Anordnung des Keils 1 auf einer Palette einen Eingriff des Spannmittels in die Aussparung 2 nicht erlaubt. In der Figur 2 ist auch die eine seitliche Hinterschneidung 5 zu erkennen, die hier S-förmig ausgeführt ist. Die Anordnung der anderen seitlichen Hinterschneidung wird aus der Figur 3 deutlich.

Die Figur 3 zeigt eine Ansicht von unten des bereits in den Figuren 1 und 2 dargestellten Ausführungsbeispiels des Keils 1. Bei dieser Darstellung wird auch die Anordnung der zweiten Unterschneidung 9 sichtbar, mittels der der Keil 1 mit der Hinterschneidung 5 eines zweiten Keils verbunden werden kann. Deutlich zu sehen ist auch die Anordnung der Kammern 7 bzw. der Stege 8, durch die der Keil 1 trotz einer erheblichen Materialeinsparung die notwendige Stabilität erhält. Es versteht sich, daß die Riffelung 6, die hier sägezahnförmig ausgeführt ist, sich nur auf der Unterseite der Stege 8, mit denen der Keil 1 in Kontakt mit einer Palette tritt, vorgesehen ist.

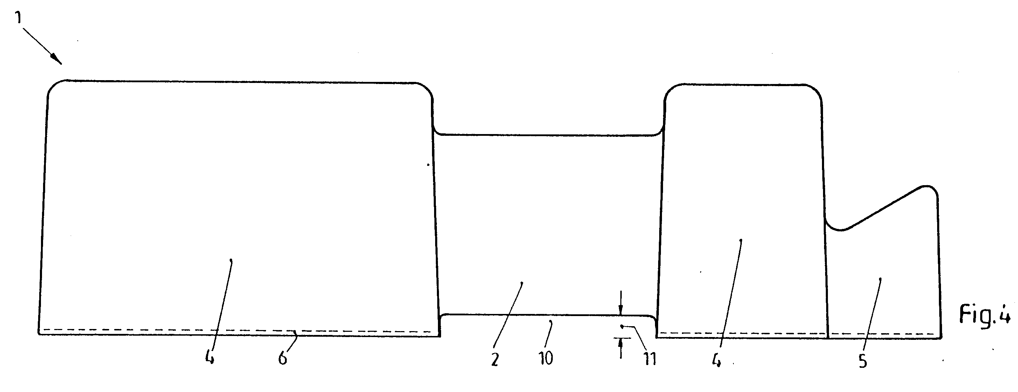

In der Figur 4 ist ein Ausführungsbeispiel des Keils 1 dargestellt, welches weitestgehend identisch mit dem der Figuren 1 bis 3 ist. Im Gegensatz zu dem Ausführungsbeispiel der Figuren 1 bis 3 ist hier aber eine an die Aussparung 2 anschließende Rinne 10 auf der Unterseite des Keils vorgesehen. Die Höhe 11 der Rinne 10 ist so bemessen, daß sie einen Spanngurt oder ein ähnliches Spannmittel bequem aufnehmen kann. Ein Verspannen des Keils 1 mit einer Rolle und den Brettern einer Palette wird durch die Rinne 10 bei jeder beliebigen Relativlage des Keils 1 zu den Brettern der Palette bzw. deren Zwischenräumen ermöglicht.

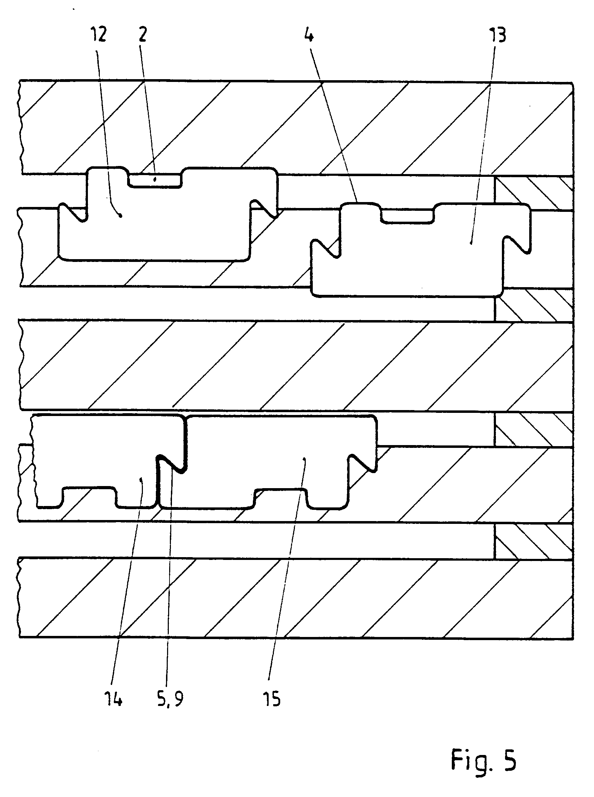

Die Figur 5 zeigt eine Aufsicht auf eine Palette mit mehreren darauf angeordneten Keilen. Der Keil 12 befindet sich in einer derartigen Relativlage, daß ein Spannmittel in seine Aussparung 2 eingreifen und unterhalb der Bretter der Palette entlang geführt werden kann. Bei dem Keil 13 ist dies aufgrund seiner Relativlage zu dem Zwischenraum zwischen zwei Brettern der Palette nicht möglich. Hier muß ein Spannmittel an der Rückseite 4 des Keils 13 angreifen. Die Keile 14 und 15 sind in einer miteinander verbundenen Stellung dargestellt. Die Hinterschneidung 5 des Keils 14 greift in die Hinterschneidung 9 des Keils 15 ein. Auf diese Weise können der Breite der Palette bzw. der zu transportierenden Rolle entsprechend beliebig viele Keile zusammengefügt werden. Bei der Relativstellung der Keile 14 und 15 zu den Brettern der Palette bzw. zu deren Zwischenräumen ist ein Angreifen eines Spannmittels an den Keilen nur möglich, wenn diese an ihre Aussparung anschließende Rinnen 10 auf ihrer Unterseite aufweisen.

## Patentansprüche

1. Keil (1) zum sichern von Transportgut, insbesondere in der Form von Rollen, auf Paletten, mit einer mindestens eine Aussparung (2) für den Eingriff eines Spannmittels aufweisenden Seite, **dadurch gekennzeichnet**, daß der Keil in seinen seitlichen Endbereichen Hinterschneidungen (5, 9) zum formschlüssigen Zusammenschluß mehrerer Keile (1) nebeneinander aufweist und daß die mindestens eine Aussparung auf der Rückseite (4) des Keils (1) vorgesehen ist.

2. Keil nach Anspruch 1, **dadurch gekennzeichnet, daß** der Keil eine mit einer Riffelung (6) versehene Unterseite aufweist.

3. Keil nach Anspruch 2, **dadurch gekennzeichnet, daß** die Riffelung (6) sägezahnförmig ausgebildet ist und ihre Zähne nach der Kraftwirkrichtung ausgerichtet sind.

4. Keil nach einem der Ansprüche 1 bis 3, **dadurch gekennzeichnet, daß** die Hinterschneidungen (5, 9) S-förmig ausgebildet sind.

5. Keil nach einem der Ansprüche 1 bis 4, **dadurch gekennzeichnet, daß** auf der Unterseite des Keils (1) an die Aussparung (2) anschließend eine Rinne (10) für das Spannmittel vorgesehen ist.

6. Keil nach einem der Ansprüche 1 bis 5, **dadurch gekennzeichnet, daß** er nach unten offene Kammern (7) besitzt.

7. Keil nach einem der Ansprüche 1 bis 6, **dadurch gekennzeichnet, daß** der Keil (1) eine Keilschräge (3) mit einer rutschfesten Oberfläche aufweist.

8. Keil nach einem der Ansprüche 1 bis 7, **dadurch gekennzeichnet, daß** er eine Breite aufweist, die größer ist als seine Länge.

9. Keil nach einem der Ansprüche 1 bis 8, **dadurch gekennzeichnet, daß** er aus Kunststoff, Leichtmetall oder Stahl besteht.

## Claims

1. Wedge (1) for securing goods, especially in the form of rolls, on pallets, with one side showing at least one recess (2) for the insertion of a fastening device, wherein the wedge shows undercuts (5, 9) in its lateral ends for several wedges (1) to be locked positively beside each other, and wherein the rear side (4) of wedge (1) is provided with at least one recess.

2. Wedge according to claim 1, wherein the wedge shows an underside provided with a fluting (6).

3. Wedge according to claim 2, wherein the fluting (16) is designed in the form of saw teeth and its teeth are aligned in the direction of the dynamic effect.

4. Wedge according to one of the claims 1 to 3, wherein the undercuts (5, 9) are designed in the form of the letter S.

5. Wedge according to one of the claims 1 to 4, wherein the underside of wedge (1) is provided with a channel (10) joining recess (2) for the fastening device.

6. Wedge according to one of the claims 1 to 5, wherein it has chambers (7) which are open to the bottom.

7. Wedge according to one of the claims 1 to 6, wherein wedge (1) shows a wedge slant (3) with a non-skidding surface.

8. Wedge according to one of the claims 1 to 7, wherein it shows a width which is greater than its length

9. Wedge according to one of the claims 1 to 8, wherein it consists of plastics, light metal or steel.

## Revendications

1. Cale (1) pour bloquer sur des palettes des produits transportés, en particulier sous la forme de rouleaux, avec une face présentant au moins une découpe (2) pour l'engagement d'un moyen de serrage, caractérisée en ce que la cale présente, dans ses zones d'extrémité latérales, des détalonnages (5, 9) pour l'assemblage par concordance de forme de plusieurs cales (1) côte à côte, et en ce que ladite découpe, au moins une, est prévue sur la face arrière (4) de la cale (1).

2. Cale selon la revendication 1, caractérisée en ce que la cale présente une face inférieure pourvue d'une cannelure (6).

3. Cale selon la revendication 2, caractérisée en ce que la cannelure (6) est en forme de dents de scie et ses dents sont orientées dans le sens d'action des forces.

4. Cale selon l'une des revendications 1 à 3, caractérisée en ce que les détalonnages (5, 9) sont en forme de S.

5. Cale selon l'une des revendications 1 à 4, caractérisée en ce qu'une gorge (10) est prévue pour le moyen de serrage, sur la face inférieure de la cale (1), à la suite de la découpe (2).

6. Cale selon l'une des revendications 1 à 5, caractérisée en ce qu'elle possède des chambres (7) ouvertes vers le bas.

7. Cale selon l'une des revendications 1 à 6, caractérisée en ce que la cale (1) présente une face oblique (3) avec une surface antidérapante.

8. Cale selon l'une des revendications 1 à 7, caractérisée en ce qu'elle présente une largeur qui est supérieure à sa longueur.

9. Cale selon l'une des revendications 1 à 8, caractérisée en ce qu'elle est en matière plastique, métal léger ou acier.
